# EUROPÄISCHE PATENTSCHRIFT

(11) **EP 2 043 108 B1**
(45) Veröffentlichungstag und Bekanntmachung des Hinweises auf die Patenterteilung: **31.10.2012**
(21) Anmeldenummer: 08016906.3
(22) Anmeldetag: 25.09.2008
(51) Int. Cl.: G21F 9/00, B60P 3/00, G21F 7/005, B60H 1/00

(54) **Zugang für ein mobiles oder stationäres Objekt**
Access for a mobile or stationary object
Accès pour un objet mobile ou stationnaire

(30) Priorität: 25.09.2007 DE 102007045770
(43) Veröffentlichungstag der Anmeldung: 01.04.2009
(73) Patentinhaber: Rheinmetall Landsysteme GmbH, 24107 Kiel (DE)
(72) Erfinder: Gerlach, Klaus-Peter, 34302 Guxhagen (DE); Schmidt, Dieter, 34277 Fuldabrück (DE)
(74) Vertreter: Dietrich, Barbara

(56) Entgegenhaltungen:
- FR-A- 1 497 726
- FR-A- 2 221 246
- FR-A- 2 755 916
- US-A- 4 485 489

## Beschreibung

Die Erfindung betrifft elnen Zugang zu einer mobilen Personenschleuse insbesondere für ABC-Nachweisfahrzeuge.

Aus der DE 103 45 351 A1 ist ein mobiles Dekontaminationsaystem zum Dekontamlnleren von Personen und Gegenständen bekannt, bestehend aus elnem ersten und einem weiteren Dekontaminationsmodul, die jeweils Einrichtungen zum Dekontaminieren von Personen bzw. Gegenständen aufwelsen. Die Module sind transportable Container. Beide sind autark arbeitsfähig.

Ein weiteres transportables System zur Dekontamination von Personen sowie Gegenständen wird mit der DE 198 21 042 A1 beschrieben. Dieses umfasst gleichfalls Containermodule für die Frischwasserversorgung, Abwasserentsorgung, Kraftstoffversorgung und Stromversorgung. Weitere Container weisen separate Anlagen zur Dekontamination von Personen und Geräten auf.

Auch die DE 34 32 282 A1 beschäftlgt sich mit einem mobilen Dekontaminationssystem. Ein Transportfahrzeug dient zum Transport eines Containers, der ein Kleiderdekontaminatlonssystem enthält. Mittele Anhänger kann des Weiteren eine Porsonendekontaminationseinrichtung transportiert werden. Für die zusätzliche Nutzung des Fahrzeuges Ist dieses mit einem faltbaren oder elastischen Tank ausgerüstet.

Eln Laboratorium für ortsveränderlichen Einsatz zur Durchführung von Messungen und Untersuchungen insbesondere auf dem Gebiet des Schutzes gegen ionisierende Strahlung publlziert die DD 82 510.

Eine Vorrichtung zur Schnelldekontamination von Personen im Zivil- und Katastrophonschutz wird In der DE 198 14 740 A1 bzw. DE 298 24 860 U1 offenbart. Die Vorrichtung umfasst einen Frischwassertank, einen Abwassertank sowie diverse andere Baugruppen, die auf der Ladefläche bzw. einer Palette auf der Ladefläche eines Fahrzeuges transportiert werden.

Nachteilig bei diesen bekannten Systemen ist der hohe konstruktive bzw. bauliche Aufwand.

Bei ABC-Nachweisfahrzeugen darf zudem die goschützte Mannschaft das Fahrzeug erst verlassen, nachdem diese auf einem Dekontaminatiponsplatz vollständig dekontaminiert wurde.

Dle Erfindung stellt sich die Aufgabe, einen Zugang für ein mobiles Dekontamlnierungssystem aufzuzeigen, der neben einem einfachen konstruktiven Aufbau nur einen geringen Bauraum einnimmt.

Gelöst wird die Aufgabe durch die Merkmale des Patentanspruchs 1. Vorteilhafte Ausführungen sind den Unteransprüchen entnehmbar.

Es ist vorgesehen, insbesondere an ABC-Nachwelsfahrzeugen, derartigen Containern und Objekten eine Art aufblasbare bzw. entfaltbare Schleuse an einem Zugang (Tür, Fenster, Luken etc.) zum Fahrzeug, Container oder dergleichen anzubringen. Das bewirkt jedoch, daas dieser Zugang nur dann nutzbar ist, wenn die Schleuse aktiviert worden Ist. Insbesondere für den Normalfall Ist dieser Zugang nicht mehr nutzbar.

Diese Überlegungen weiterführend, liegt der Erfindung die Idee zugrunde, einen die Schleuse beinhaltenden Rahmen oder Kasten größer als den Objektzugang zu gestalten. Unter normalen Einsatzbedingungen wird der Rahmen / Kasten zusammen mit dem Zugang und der eingefalteten Schleuse weggedrückt, unter kontaminierten Bedingungen bzw. Einsätzen hingegen kommt die Schleuse zum Einsatz, d. h., der Ein- bzw. Ausstieg zur bzw. von der Schleuse zum Objekt erfolgt dann nur durch die Schleuse. Die aufgebaute Schleuse bietet dabei Platz zum Aufschwenken der Zugangtür etc. zum Objekt / Fahrzeug und für das Ablegen sowie Verstauen zumindest des Schutzanzuges einer Person.

Im Schleusenbetrieb ist vorgesehen, dass sich die Schleuse vorzugsweise automatisch aufbaut. Die Struktur wird vom Inneren des Objektes mit Druckluft befüllt und kann sich dadurch selbstständig entfalten. Die Schleuse wird mit definiertem Luftdurchlass aus dem Objekt oder Fahrzeug heraus mit gefllterter Luft aus der ABC-Schutzbelüftungsanlage versorgt und entfaltet sich.

Das Belüftungesystem erzeugt eine abgestufte Belüftungskaskade vom Objekt / Fahrzeug über das Schleuseneingangssystem bis zur Umgebung hin. Die aus dem Objekt / Fahrzeug abströmende Luft wird in das Schleusenzelt bzw. die Schleusenkammer geleitet. Dabei werden alle Türen und Öffnungen geschlossen gehalten, bis der erforderliche Druck aufgebaut ist. Um den Volumenstrom der ABC-Schutzbelüftungsanlage zum Spülen des Schleusenzeltes innerhalb kürzester Zelt nutzen zu können, wird bei Personentransfer das Glove-Box-Verbundsystem vorzugsweise in einen Save-mode gefahren. Das mlt ABC-gefilterter Luft gefüllte Schleuseneingangssystem Ist zum Ausschleusen berelt. Die Druckkaskaden bzw. das Druckgefälle zwischen Objekt, Schleuse und Außen ermöglicht so die Schlausung von Material sowie Personen.

Die Schleuse an einem ABC-Nachweisfahrzeug nutzt als Barriereeinheit zum Aufbau des Fahrzeugs vorrangig eine vorhandene Tür Im Heckbereich. Für die Weiterfahrt des Fahrzeuges ist ein einfaches Zusammenfalten des Zeltes mit Hilfe von einfachen mechanischen Faltmitteln oder das Entziehen der Luft aus dem Zelt angedacht, so dass die Schleuse am Heck des Fahrzeuges anliegt, eine weitere Nutzung jedoch möglich bleibt. Auch schleusenseitig angebrachte Gummizüge können die Schleuse in diese so genannte Fahrstellung bringen. Wird ein selbstetandiges Zusammenfalten angestrebt, so hat sich auch hier als vorteilhafte Variante gezeigt, dass Nachströmen der Luft durch ein vorzugsweise fahrzeugeigenes Überdruckventil zu stoppen und auch hier die Tragstruktur als auch den Innenraum der Schleuse aktiv zu entlüflen.

Anhand zweler Ausführungebeispiele mit Zeichnungen soll die Erfindung näher erläutert worden. Es zeigt:
- Fig. 1: eine gefaltete Schleuse Im Anbauzustand vor einem Objektzugang,
- Fig. 2: der Zugang zum Objekt aus Fig. 1,
- Fig. 3: die Schleuse im entfalteten Zustand.

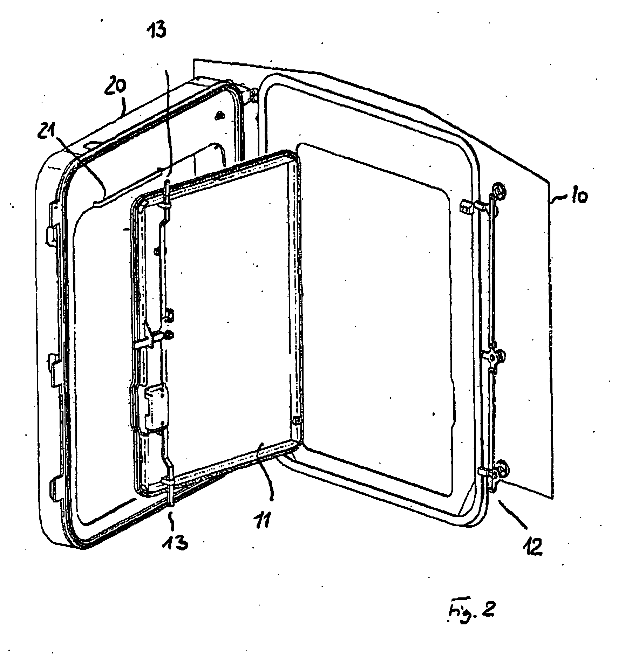

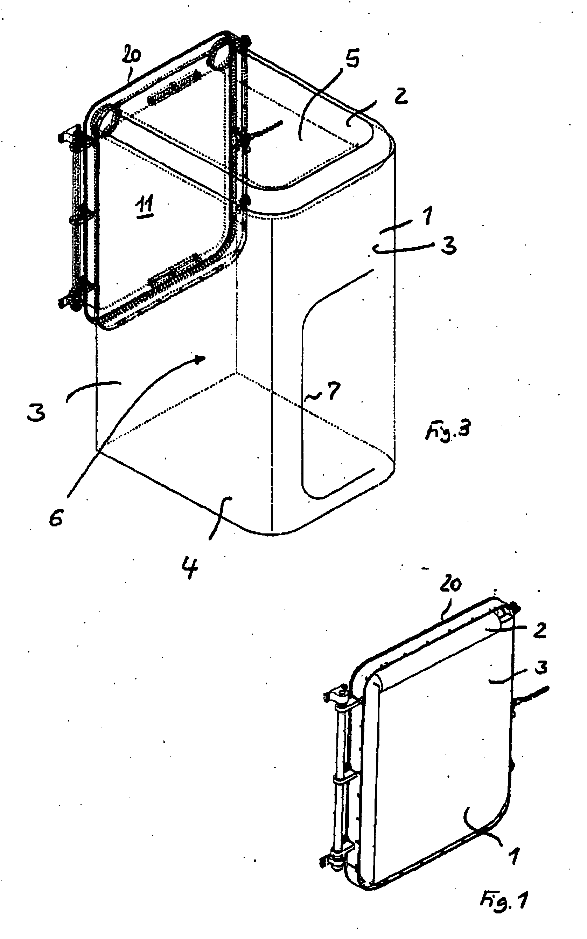

Die Fig. 1 zeigt die zusemmengefaltete Schleuse 1 insbesondere zur Dekontamination von Personen und / oder Gegenständen, die hinter einer Abdeckung (nicht näher dargestellt) untergebracht, vor einem in Fig. 2 erkennbaren Ausgang / Zugang 11 zu einem Objekt 10, wie Fahrzeug, Gebäude ate. (leicht angedeutet) angebracht werden kann.

Das Objekt 10 Ist im bevorzugten Ausführungsbeispiel ein ABC-Nachwelsfahrzeug.

Die in Fig. 3 In einer Variante dargestellte Schleuse 1 ist bei einem ABC-Nachweiafahrzeug 10 in der Regel am Hockausatieg 12 des Fahrzeuges 10 angebunden. Dazu wird an das Fahrzeugheck ein Schleusenkasten 20 mit der gefalteten Schleuse 1 angebracht.

Im Normalbertrieb wird die Tür 11 des Heckausstieges 12 wie gewohnt entriegelt und einen Spalt aufgemacht. Danach wird die Tür 11 wieder verriegelt, jedoch so, dass Riegel 13 in Gegenhalter 21 am Schleusenkesten 20 greifen können. Daraufhin wird der Schleusenkasten 20 entrlegelt und der gesamte Schleusenkasten 20 gemeinsam mit der Fahrzeugtür aufgeschwenkt. Der Aus- bzw. Einstieg In das Fahrzeug 10 ist frei.

Zum Ausschleusen gelangt man durch Öffnen des Heckausatieges in die Schleuse 1. Nach dem Schließen des Zuganges 11 kann die Schleuse 1 durch eine schleuseneigane Außentür 7 verlassen werden. Für das Einschleusen wird die schleuseneigene Außentür 7 geöffnet und danach ordnungsgemäß verschlossen. Die Person / der Gegenstand werden dekontaminiert. Nachdem Person und Ausrüstung gereinigt sind, kann der Zugang 11 wieder geöffnet werden. Diese Zeit muss so lange sein, dass die Luft in der Schleusenkammer 6 komplett mit frischer Luft aus dem Fahrzeug ausgetauscht ist.

Die Schleuse 1 besteht vorzugsweise aus aufblasbaren Druckluftstützen 2 als Tragestruktur der Schleuse 1 und weist Seitenwände 3, ein Bodensegment 4 und ein Dach 5 auf, die elne. Schleusenkammer 6 bilden. Eine der Seltenwände 3 besitzt eine luftdicht verschließbare Außentür 7, eine weitere bevorzugt ein Fenster. Die Stützen 2 sind mit einem Gebläse (nicht näher dargestellt) oder einem anderen, die Stützen 2 zum Entfalten bringenden Aggregat funktional verbunden. Sie weist lange Seitenwände 3 auf, um den Höhenunterschied zwischen Hecktür 11 und dem Bodenniveau zu reichen.

Die Stützen 2 der Schleuse 1 werden aus dem Objekt / Fahrzeug 10 heraus mit Druckluft befüllt und entfaltet sich selbstständig, nehmen dabei die zur Schleuse 1 gehörenden Seitenwände 3, das Bodensegment 4 sowie das Dach 5 mit. Die Schleusenkammer (-struktur) 6 wird durch ein Ventil oder dergleichen mit definiertem Luftdurchlass aus dem Objekt / Fahrzeug 10 heraus mit gefilterter Luft aus einer ABC-Schutzbelüfturigsanlage (nicht naher dargestellt) versorgt. Dae Belüftungssystem erzeugt eine abgestufte Belüftungskaskade vom Objekt über das Schleuseneingangssystem bis zur Umgebung hin. Die beispielsweise aus einem Überdruckventil abströmende Luft wird in das Schieusenzelt bzw. die kammer 6 geleitet. Dabei werden alle Türen und Öffnungen geschlossen gehalten, bis der erforderllche Druck aufgebaut ist.

Diverse Dekontaminationseinrichtungen oder -mlttel, beispielsweise eine Dusche und Wasser, können aus dem Objekt / Fahrzeug 10 heraus bereitgestellt werden,

Nach funktlonalem Gebrauch kann die Schleuse 1 wieder zusammengefaltet werden.

## Patentansprüche

1. Zugang (11) für ein mobiles oder stationäres Objekt (10), **dadurch gekennzeichnet, dass**
- vor dem Zugang (11) eine entfaltbare Schleuse (1) für die Dekontamination von Personen bzw. Gegenständen im ein gefalteten Zustand In einem Schleusenkasten (20) angebracht ist, wobei
- der Schleusenkasten (20) sowie der Zugang (11) derart miteinander konstruktiv gekoppelt sind, dass für den Normalbetrieb des Zugangs (11) der Schleusenkasten (20) mit der eingefalteten Schleuse mit dem Zugang (11) verschwenkt wird und beim Gebrauch der Schleuse (1) diese durch den Zugang (11) betreten oder in Richtung Objekt (10) verlassen wird.

2. Zugang nach Anspruch 1, **dadurch gekennzeichnet, dass** Riegel (13) des Zuganges (11) in Gegenhalter (21) am Schleusenkasten (20) greifen.

3. Zugang nach Anspruch 1 oder 2, **dadurch gekennzeichnet, dass** der Zugang (11) eine Tür, ein Fenster, eine Luke oder dergleichen sein kann.

## Claims

1. Access (11) for a mobile or stationary object (10), **characterized in that**
- an unfoldable sluice (1) for the decontamination of people or objects is provided in the folded-up state in a sluice cubicle (20) in front of the access (11), wherein
- the sluice cubicle (20) and the access (11) are coupled structurally to each other in such a manner that, for normal operation of the access (11), the sluice cubicle (20) with the folded-up sluice is pivoted with the access (11) and, during use of the sluice (1), the latter is entered through the access (11) or departed from in the direction of the object (10).

2. Access according to Claim 1, **characterized in that** bolts (13) of the access (11) engage in counterholders (21) on the sluice cubicle (20).

3. Access according to Claim 1 or 2, **characterized in that** the access (11) can be a door, a window, a hatch or the like.

## Revendications

1. Accès (11) pour un obj et (10) mobile ou stationnaire, **caractérisé en ce**
- **qu'**un sas pouvant être déployé (1) et servant à la décontamination de personnes ou d'objets est monté devant l'accès (11) dans un état replié dans une caisse de sas (20),
- la caisse de sas (20) ainsi que l'accès (11) étant accouplés de manière constructive l'un avec l'autre de telle sorte que, pour le fonctionnement normal de l'accès (11), la caisse de sas (20) comprenant le sas replié soit pivotée avec l'accès (11), et lors de l'utilisation du sas (1), grâce à l'accès (11), on puisse pénétrer dans ce sas ou le quitter en direction de l'objet (10).

2. Accès selon la revendication 1, **caractérisé en ce que** des dispositifs de verrouillage (13) de l'accès (11) viennent en prise dans des contrebutées (21) sur la caisse de sas (20).

3. Accès selon la revendication 1 ou 2, **caractérisé en ce que** l'accès (11) peut être une porte, une fenêtre, un hublot ou similaire.
